# FASCICULE DE BREVET EUROPEEN

(11) **EP 1 068 891 B1**
(45) Date de publication et mention de la délivrance du brevet: **06.02.2008**
(21) Numéro de dépôt: 00401721.6
(22) Date de dépôt: 16.06.2000
(51) Int. Cl.: B01D 53/047

(54) **Unité d'adsorption à modulation de pression**
Druckwechseladsorptionseinheit
Pressure swing adsorption unit

(30) Priorité: 16.07.1999 FR 9909251
(43) Date de publication de la demande: 17.01.2001
(73) Titulaire: L'AIR LIQUIDE, Société Anonyme pour l'Etude et l'Exploitation des Procédés Georges Claude, 75007 Paris (FR)
(72) Inventeur: de Souza, Guillaume, 92130 Issy-les-Moulineaux (FR)
(74) Mandataire: Pittis, Olivier

(56) Documents cités:
- EP-A- 0 022 603
- EP-A- 0 513 747
- FR-A- 2 769 851

## Description

La présente invention est relative à une unité d'adsorption à modulation de pression (Pressure Swing Adsorption ou PSA), du type comprenant 2N adsorbeurs (N ≥ 2) ayant chacun une sortie de production. Elle s'applique notamment à la production d'hydrogène, de méthane ou de CO par adsorption PSA.

Les cycles PSA comprennent successivement, pour chaque adsorbeur : une phase de production par adsorption ; une phase de régénération de l'adsorbant comprenant au moins une étape de dépressurisation à co-courant par équilibrage de pressions avec un autre adsorbeur, une étape de dépressurisation finale à contre-courant avec évacuation de gaz résiduaire, et généralement une étape d'élution à la basse pression du cycle ; et une phase de repressurisation comprenant au moins une étape d'équilibrage de pressions avec un autre adsorbeur, et une étape de repressurisation finale au moyen de gaz de production.

Dans ce qui suit, on entend par " entrée " et " sortie " d'un adsorbeur l'entrée de gaz à traiter et la sortie de gaz produit pendant l'étape de production du cycle PSA, par " co-courant " le sens de circulation de l'entrée vers la sortie, et par " contre-courant " le sens de circulation inverse. De plus, les pressions indiquées sont des pressions absolues.

Dans les unités PSA classiques du type précité, il est prévu pour chaque étape du cycle (production, équilibrages de pressions entre adsorbeurs, dépressurisation à contre-courant, élution, repressurisation finale) une ligne transversale commune à tous les adsorbeurs, qui peut être reliée individuellement à la sortie de chaque adsorbeur au moyen d'une vanne correspondante.

Par suite, lorsque l'unité comporte un nombre important d'adsorbeurs, comme c'est souvent le cas dans les installations de production d'hydrogène, chaque adsorbeur est associé à autant de vannes qu'il y a de lignes transversales. Ceci conduit à une tuyauterie extrêmement complexe et coûteuse, tant du point de vue de l'investissement que de celui de la maintenance ou de l'encombrement.

Par ailleurs, FR-A-2 769 851 décrit une unité d'adsorption PSA du type précité et selon le préambule de la revendication 1, où:
- les adsorbeurs sont couplés sous la forme de paires d'adsorbeurs ;
- les sorties des absorbeurs de chaque paire sont reliées par une ligne directe munie de deux premières vannes ; et
- un point intermédiaire de la ligne directe situé entre les deux premières vannes est relié à une ligne transversale commune à toutes les paires.

L'invention a pour but de simplifier considérablement la tuyauterie des unités PSA.

A cet effet, l'invention a pour objet une unité d'adsorption PSA du type précité, en particulier selon FR-A-2 769 851, caractérisée en ce que la liaison entre le point intermédiaire de la ligne directe situé entre les deux premières vannes et la ligne transversale commune à toutes les paires se fait par l'intermédiaire d'une vanne de liaison.

L'unité d'adsorption PSA suivant l'invention peut comporter une ou plusieurs des caractéristiques suivantes, prises isolément ou suivant toutes leurs combinaisons techniquement possibles :
- les adsorbeurs étant numérotés dans leur ordre de passage en phase de production au cours de chaque cycle, les couples d'adsorbeurs sont A₁-A_{N+1,} A₂-A_{N+2}. ..., A₁-A_{N+i} ... A_{N}-A_{2N},
- au moins deux desdits points intermédiaires sont reliés par une ligne de liaison munie d'une deuxième vanne de liaison,
- les deux premières vannes sont des vannes de contrôle tandis que les vannes de liaison sont des vannes tout ou rien,
- ledit point intermédiaire est en outre relié à la ligne transversale commune par une ligne de liaison supplémentaire munie d'une vanne de liaison supplémentaire qui est une vanne de contrôle,
- l'unité comprend en outre au moins une ligne transversale additionnelle reliée individuellement à la sortie de chaque adsorbeur à travers une vanne de contrôle,
- au moins une ligne transversale additionnelle peut être subdivisée, par manoeuvre d'une vanne additionnelle, en deux demi-lignes transversales reliées chacune à N adsorbeurs,
- au moins une ligne transversale additionnelle est subdivisée en deux demi-lignes transversales, dont chacune est reliée à N adsorbeurs,
- les adsorbeurs contiennent au moins un adsorbant adapté à la production d'hydrogène, de méthane ou de CO, typiquement un charbon actif et/ou une zeolite et/ou une alumine activée.

Des exemples de réalisation de l'invention vont maintenant être décrits en regard des dessins schématiques annexés, sur lesquels :
- la Figure 1 représente une paire d'adsorbeurs d'une unité PSA conforme à l'invention ;
- la Figure 2 est un diagramme qui illustre un cycle de fonctionnement d'une unité PSA suivant l'invention à six adsorbeurs ;
- la Figure 3 représente une unité PSA correspondante ;

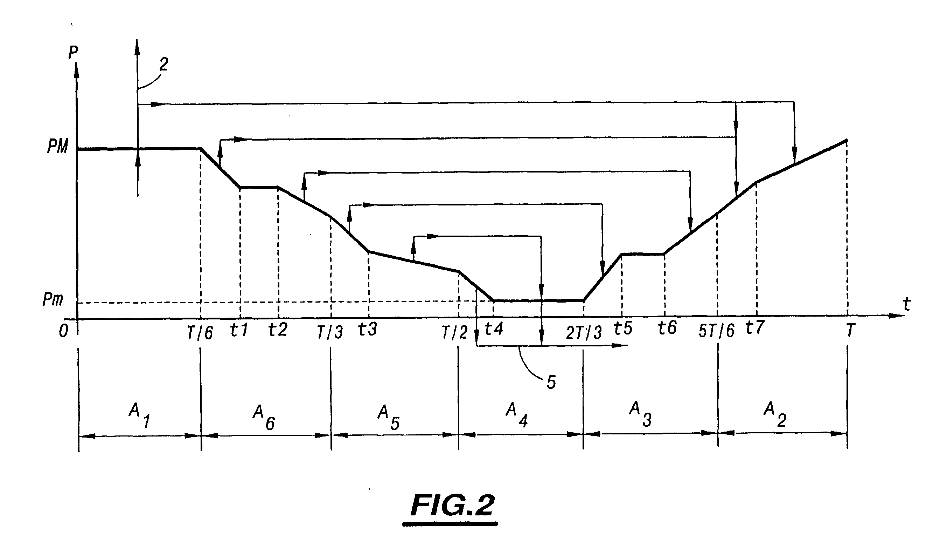

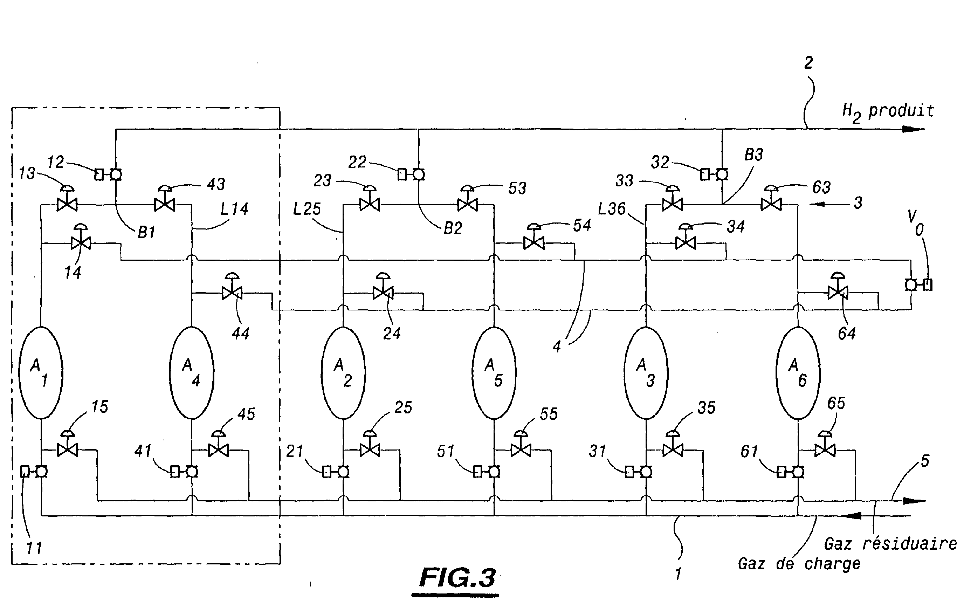

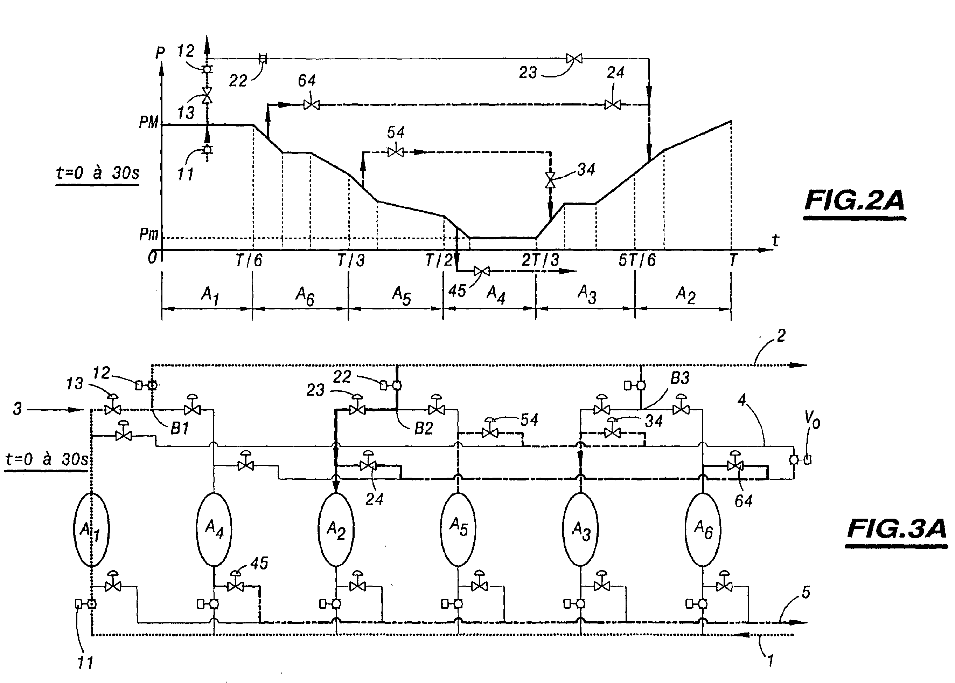

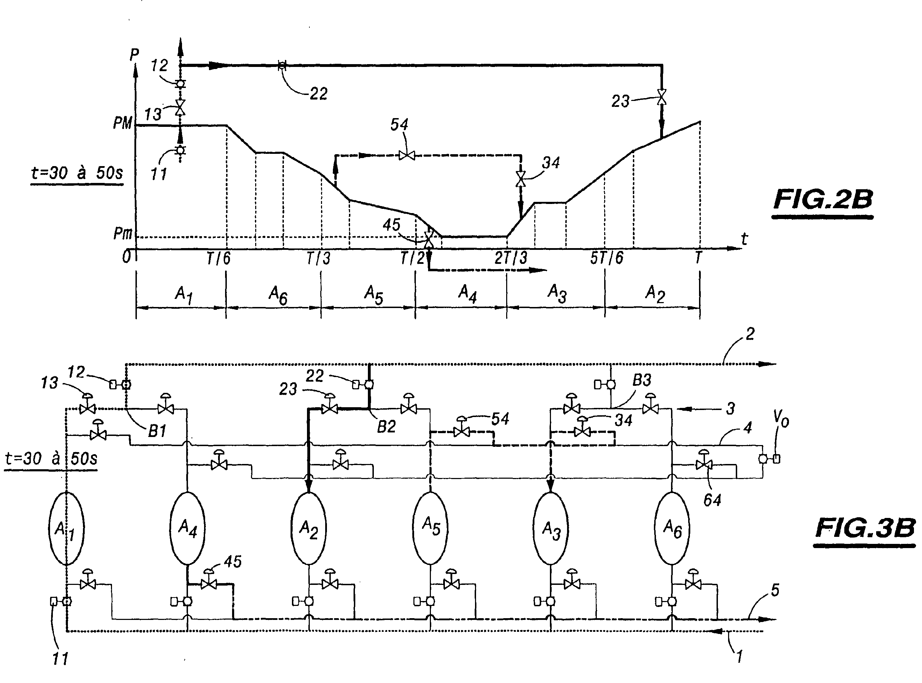

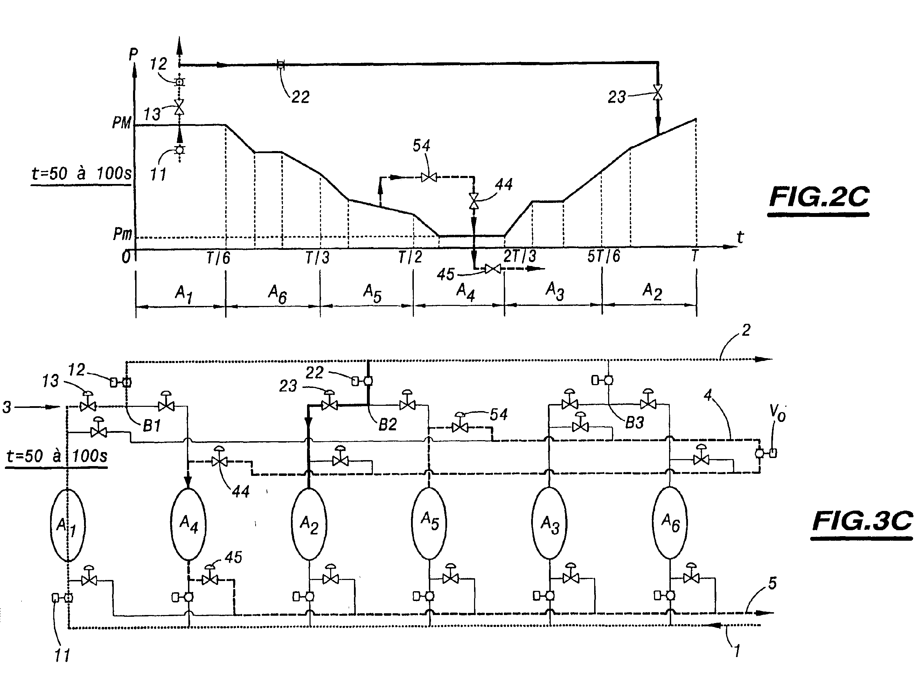

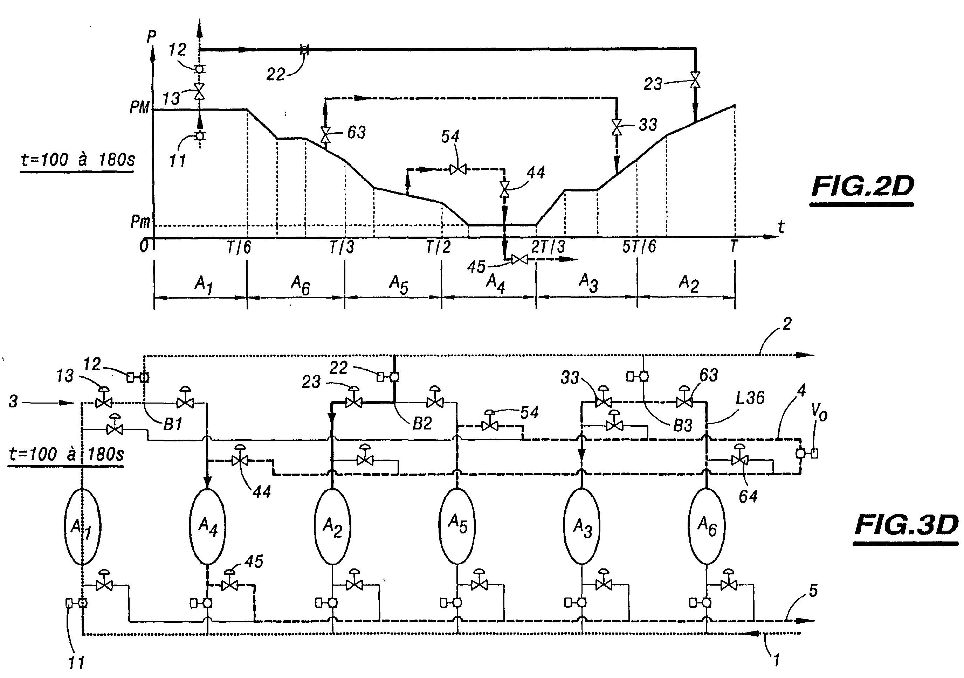

- les Figures 2A à 2D sont des diagrammes analogues à la Figure 2 qui illustrent quatre subdivisions du cycle ;
- les Figures 3A à 3D représentent l'état des vannes de l'unité d'adsorption dans chacune de ces quatre subdivisions du cycle ;

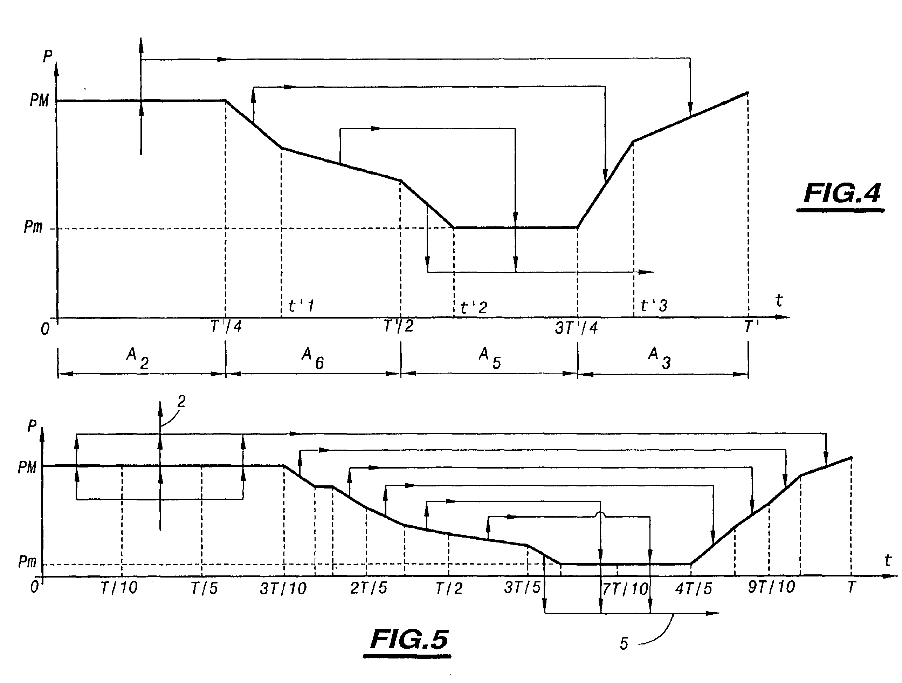

- la Figure 4 est un diagramme analogue à la Figure 2 qui illustre une marche exceptionnelle de l'unité ;
- la Figure 5 est un diagramme analogue à la Figure 2 mais correspondant à un cycle d'une unité PSA suivant l'invention à dix adsorbeurs ;

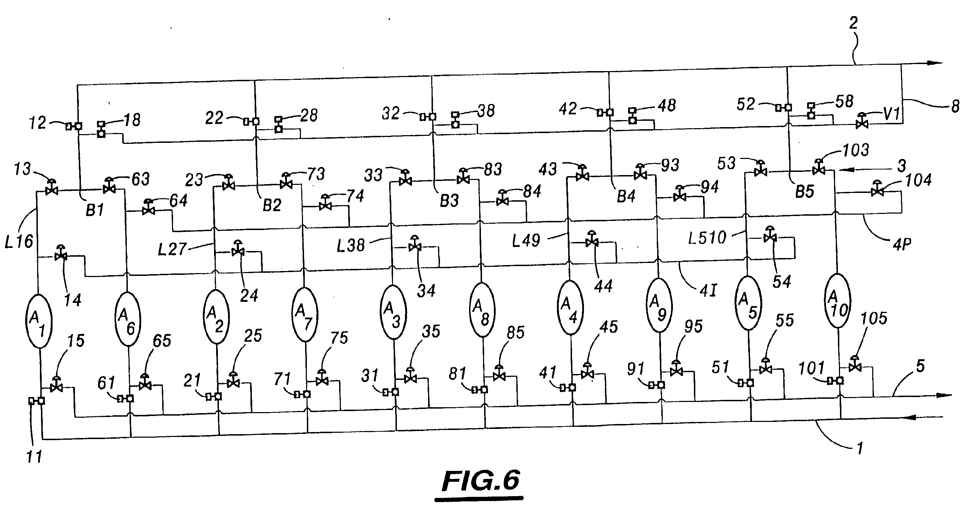

- la Figure 6 représente cette unité PSA à dix adsorbeurs ;

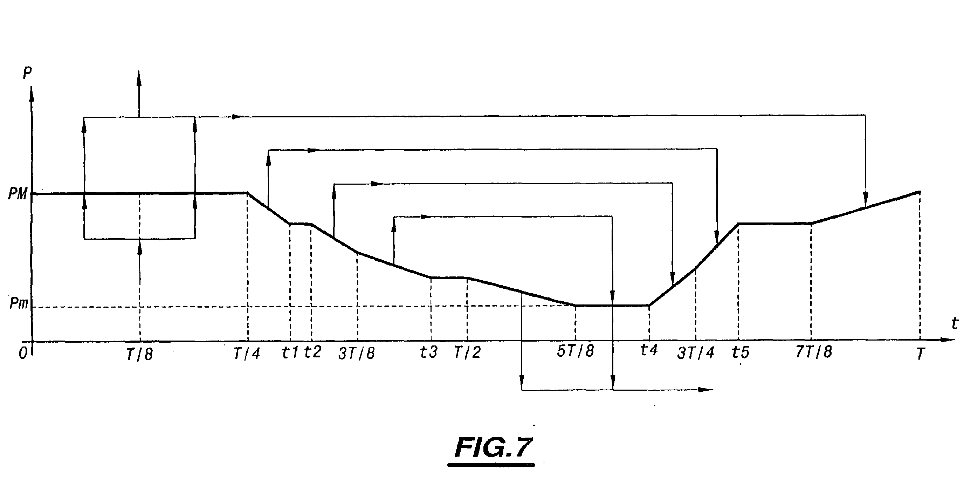

- la Figure 7 est un diagramme analogue à la Figure 2 mais correspondant à un cycle d'une unité PSA suivant l'invention à huit adsorbeurs ; et

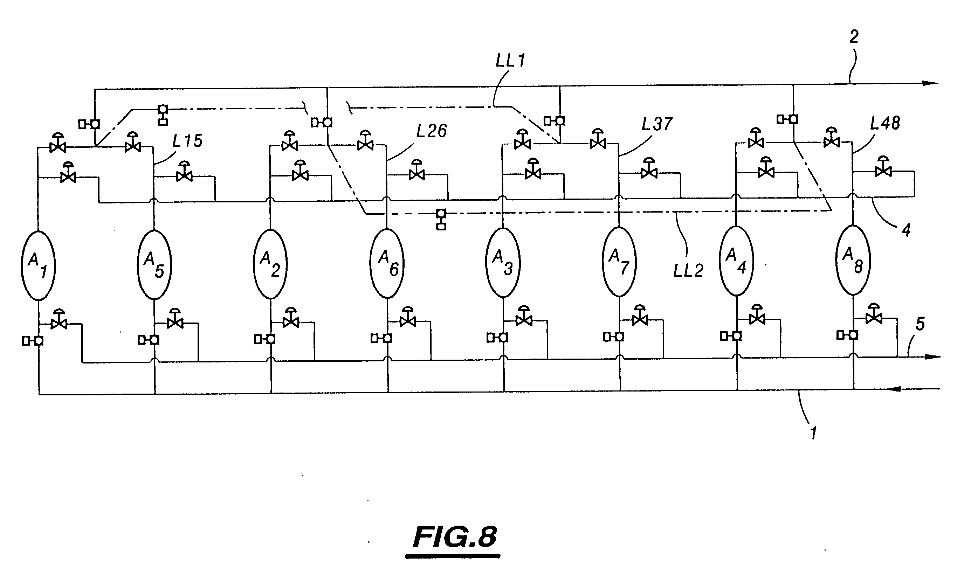

- la Figure 8 représente cette unité PSA à huit adsorbeurs.

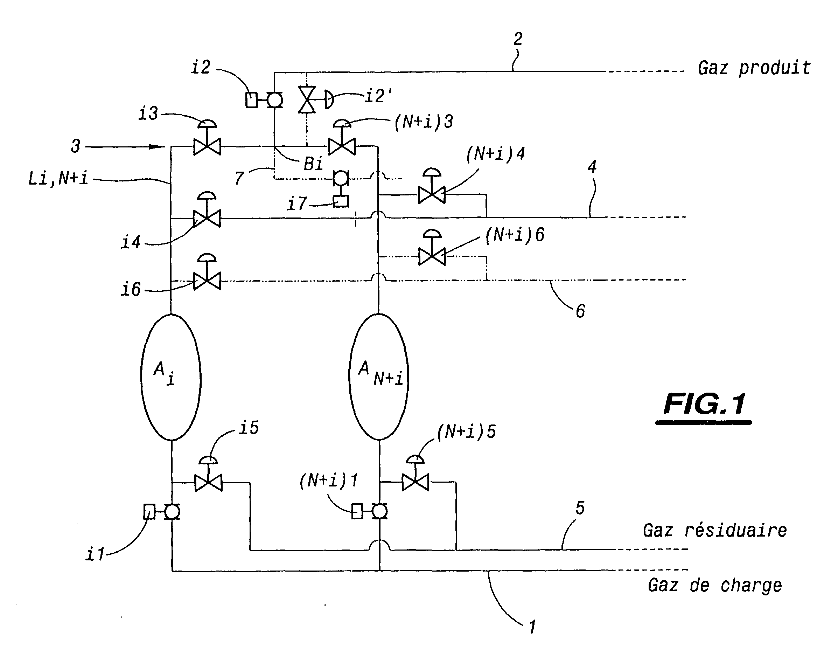

On a représenté sur la Figure 1 le couple d'adsorbeurs d'indice i d'une unité de production d'hydrogène par PSA ayant 2N adsorbeurs. Ces adsorbeurs étant numérotés de 1 à 2N dans l'ordre de leur mise en phase de production, les deux adsorbeurs du couple i sont les adsorbeurs Aᵢ et A_{N+i} pour des raisons qui apparaîtront plus loin.

Le cycle PSA comprend par exemple une étape de production, des étapes d'équilibrage de pressions entre adsorbeurs, une étape de dépressurisation à contre-courant, une étape d'élution et une étape de repressurisation finale avec du gaz produit. Pour assurer les transferts de gaz au cours de ces différentes étapes, il est prévu :
- une ligne transversale 1 d'alimentation en gaz de charge, reliée individuellement à l'entrée de chaque adsorbeur Aₓ via une vanne TOR (tout ou rien) notée x1 ;
- une ligne transversale 2 de production d'hydrogène épuré ;
- pour chaque couple Aᵢ - A_{N+i}, une ligne directe L_{i,N+i} (typiquement une seule ligne directe pour chaque paire) destinée à au moins une étape du cycle au cours duquel les sorties des deux adsorbeurs du couple doivent être reliées, cette ligne directe reliant les sorties des deux adsorbeurs du couple. La ligne L_{i,N+i} est équipée de deux vannes de contrôle i3 et (N+i)3. La ligne transversale 2 est reliée à un point B, de la ligne L_{i,N+i} situé entre ces deux vannes, via une vanne TOR i2 : éventuellement, comme indiqué en trait mixte, une vanne de contrôle i2' peut être montée en parallèle aux bornes de la vanne i2 ;
- une autre ligne transversale 4, destinée à au moins une autre étape d'équilibrage/élution du cycle. Cette ligne est reliée individuellement à la sortie de chaque adsorbeur Aₓ via une vanne de contrôle notée x4 ;
- une ligne transversale 5 d'évacuation de gaz résiduaire, reliée individuellement à l'entrée de chaque adsorbeur Aₓ, via une vanne de contrôle notée x5.

Comme illustré en trait mixte, d'autres lignes transversales 6, reliées individuellement à la sortie de chaque adsorbeur Aₓ via une vanne de contrôle x6 de la même manière que la ligne 4, peuvent être prévues en supplément pour des cycles PSA plus complexes.

De plus, également comme indiqué en trait mixte, une conduite de liaison 7 équipée d'une vanne TOR i7 peut relier les points B, d'au moins deux lignes directes.

En variante, les lignes transversales peuvent être reliées individuellement aux adsorbeurs par des vannes TOR et être équipées chacune d'une vanne de contrôle.

Les Figures 2 et 3 illustrent l'application de l'invention à un cycle à six adsorbeurs ayant un adsorbeur à la fois en production et trois équilibrages de pressions.

L'unité à six adsorbeurs utilisée (Figure 3) correspond exactement au schéma de la Figure 1, avec trois couples d'adsorbeurs A₁-A₄, A₂-A₅ et A₃-A₆. II n'y a ni vanne i2', ni ligne transversale supplémentaire 6, ni ligne de liaison 7. En revanche, la ligne 4 peut être subdivisée en deux demi-lignes par une vanne TOR V₀.

Par ailleurs, l'installation comporte par ailleurs des moyens, connus en soi et non représentés, de commande, de régulation et d'alimentation électrique et en fluide réfrigérant, adaptés pour effectuer le cycle illustré sur la Figure 2.

Sur la Figure 2, où les temps t sont portés en abscisses et les pressions absolues P en ordonnées, les traits orientés par des flèches indiquent les mouvements et destinations des courants gazeux et, en outre, le sens de circulation dans l'adsorbeur : lorsqu'une flèche est dans le sens des ordonnées croissantes (vers le haut du diagramme), le courant est dit à co-courant dans l'adsorbeur. Si la flèche dirigée vers le haut est située au-dessous du trait indiquant la pression dans l'adsorbeur, le courant pénètre dans l'adsorbeur par l'extrémité d'entrée de l'adsorbeur ; si la flèche, dirigée vers le haut, est située au-dessus du trait indiquant la pression, le courant sort de l'adsorbeur par l'extrémité de sortie de l'adsorbeur ; lorsqu'une flèche est dans le sens des ordonnées décroissantes (vers le bas du diagramme), le courant est dit à contre-courant dans l'adsorbeur. Si la flèche dirigée vers le bas est située au-dessous du trait indiquant la pression de l'adsorbeur, le courant sort de l'adsorbeur par l'extrémité d'entrée de l'adsorbeur ; si la flèche dirigée vers le bas est située au-dessus du trait indiquant la pression, le courant pénètre dans l'adsorbeur par l'extrémité de sortie de l'adsorbeur.

Le cycle de la Figure 2, dont la période T est, à titre d'exemple 6x180 s, comprend les étapes successives suivantes pour un adsorbeur donné, par exemple l'adsorbeur A₁. Ce cycle est décalé d'un temps de phase T/6 d'un adsorbeur au suivant. Les échelles des temps et des pressions n'ont pas été respectées, pour la clarté du dessin. Les durées et pressions indiquées le sont à titre purement indicatif.
(1) De t = 0 à T/6 = 180 s : Production sensiblement isobare à la pression haute PM du cycle, qui est typiquement comprise entre 10 et 50 bars environ et notamment voisine de 25 bars.
(2) De T/6 à t1 : Première dépressurisation à co-courant par équilibrage de pressions avec un autre adsorbeur en cours de repressurisation à contre-courant. La durée de ces deux étapes concomitantes est 30s.
(3) De t1 à t2 : L'adsorbeur est isolé (durée : 70 s).
(4) De t2 à T/3: Deuxième dépressurisation à co-courant par équilibrage de pressions avec un contre-adsorbeur en cours de repressurisation à contre-courant. La durée de ces deux étapes concomitantes est 80 s.
(5) De T/3 à t3: Troisième dépressurisation à co-courant par équilibrage de pressions avec un autre adsorbeur en cours de repressurisation à contre-courant. La durée de ces deux étapes concomitantes est 50 s.
(6) De t3 à T/2 : Quatrième dépressurisation à co-courant. Le gaz issu de la sortie de l'adsorbeur est envoyé à un autre adsorbeur en cours d'élution. La durée de ces deux étapes concomitantes est 130 s.
(7) De T/2 à t4 : Dépressurisation finale à contre-courant jusqu'à la pression basse Pm du cycle, voisine de la pression atmosphérique. Le gaz issu de l'entrée de l'adsorbeur est envoyé à la ligne 5 et évacué en tant que gaz résiduaire. La durée de cette étape est 50 s.
(8) De t4 à 2T/3 : Elution à contre-courant, à la pression basse Pm. Du gaz d'élution provenant d'un autre adsorbeur en étape (6) décrite ci-dessus est introduit à la sortie de l'adsorbeur, et du gaz résiduaire est soutiré à son entrée et évacué dans la ligne 5.
(9) De 2T/3 à t5: Première repressurisation à contre-courant par équilibrage de pressions avec un autre adsorbeur en étape (5) décrite ci-dessus
(10) De t5 à t6 : L'adsorbeur est isolé (durée : 50s).
(11) De t6 à 5T/6 : Deuxième repressurisation à con-tre-courant par équilibrage de pressions avec un autre adsorbeur en étape (4) décrite ci-dessus.
(12) De 5T/6 à t7 : Troisième repressurisation à contre-courant par équilibrage de pressions avec un autre adsorbeur en étape (2) décrite ci-dessus. Simultanément, l'adsorbeur reçoit à contre-courant du gaz de production provenant d'un autre adsorbeur en étape de production.
(13) De t7 à T : Repressurisation finale à contre-courant jusqu'à la pression haute PM du cycle, au moyen de gaz de production prélevé sur la ligne 2. La durée de cette étape est 150s.

On remarque que le prélèvement de gaz de production pendant toute l'étape de production permet de maintenir un débit de production constant.

Pendant le premier temps de phase (t = 0 à T/6), l'adsorbeur A₁ est en production. A l'instant T/6, c'est l'adsorbeur A₂ qui est repressurisé à la pression haute PM, de sorte que c'est cet adsorbeur A₂ qui entre en production. Il est suivi, à l'instant T/3, par l'adsorbeur A₃, à l'instant T/2 par l'adsorbeur A₄, à l'instant 2T/3 par l'adsorbeur A₅ et à l'instant 5T/6 par l'adsorbeur A₆. On comprend ainsi que, sur le diagramme de la Figure 2, chaque temps de phase illustre la variation de pressions dans l'un des six adsorbeurs, qui est indiqué sous l'axe des abscisses (A₁, A₆, A₅, A₄, A₃, A₂ dans l'ordre des six temps de phase).

Compte-tenu de la symétrie des liaisons entre adsorbeurs lors des étapes d'équilibrage de pressions et d'élution, les temps de phase se décomposent ainsi en quatre périodes qui vont maintenant être décrites en regard des Figures 2A-3A à 2D-3D. Sur les Figures 2A à 2D, on n'a fait figurer que les vannes ouvertes, et seules celles-ci ont été référencées sur les Figures 3A à 3D, outre la vanne V₀.
- **t = 0 à 30 s (Figures 2A et 3A) :**
   L'adsorbeur A₁ est en production (vannes 11, 13 et 12). L'adsorbeur A₂ est en repressurisation (vannes 22 et 23) afin de maintenir un débit de production constant). La vanne V₀ est fermée, ce qui permet d'effectuer sur la ligne 4 deux équilibrages différents : A₂-A₆ d'une part (vannes 24 et 64), A₃-A₅ d'autre part (vannes 34 et 54). L'adsorbeur A₄ est en dépressurisation finale (vanne 45).
- **t = 30 s à 50 s (Figures 2B et 3B) :**
   L'adsorbeur A₁ est en production (vannes 11, 13 et 12). L'adsorbeur A₂ est en repressurisation finale (vannes 22 et 23). La vanne V₀ reste fermée, et les adsorbeurs A₃ et A₅ restent reliés ensemble pour la poursuite du troisième équilibrage de pressions (vannes 34 et 54). L'adsorbeur A₄ poursuit sa dépressurisation finale (vanne 45). L'adsorbeur A₆ est isolé.
- **t = 50 s à 100 s (Figures 2C et 3C)**
   L'adsorbeur A₁ est en production (vannes 11, 13 et 12). L'adsorbeur A₂ est en repressurisation finale (vannes 22 et 23). La vanne V₀ est ouverte, et I0 ... ...es adsorbeurs A₄ et A₅ sont reliés ensemble (vannes 44 et 54). L'adsorbeur A₄ est en élution, la vanne 45 est ouverte.
- **t = 100 à 180 s (Figures 2D et 3D) :**
   L'adsorbeur A₁ est en production (vannes 11, 13 et 12). L'adsorbeur A₂ est en repressurisation finale (vannes 22 et 23). Les adsorbeurs A₃ et A₆ sont reliés ensemble par leur ligne directe L₃₆. La vanne V0 est ouverte, et les adsorbeurs A₄ et A₅ sont reliés ensemble (vannes 44 et 54).

Grâce au schéma de liaison décrit ci-dessus, avec ses trois lignes directes L₁₄, L₂₅ et L₃₆, et la subdivision de la ligne transversale 4 au moyen de la vanne V₀, le nombre de vannes par adsorbeur et le nombre total de vannes sont fortement réduits, de même que les phases d'inactivité des lignes.

Ainsi, l'unité de la Figure 3 comprend 18 vannes de contrôle et 10 vannes TOR, contre 19 et 18 respectivement pour le schéma classique adapté au même cycle. Ce schéma classique comporte en effet six lignes transversales reliées individuellement à chaque adsorbeur, et une vanne de contrôle du débit de repressurisation finale. La réduction du nombre total de vannes est donc 1-(37/28) = 32%. A cette économie s'ajoutent les gains correspondant à une tuyauterie simplifiée comportant moins de coudes, de soudures, etc., et à une diminution du nombre de boîtes de jonction et d'entrées/sorties de l'automate de commande. La fiabilité est, elle aussi, améliorée de façon correspondante.

Il est à noter que les étapes qui correspondent à l'emploi d'une ligne directe L_{i,N+i} sont placées à des instants du cycle où il y a le plus grand nombre d'étapes simultanées. Ceci permet, grâce à la subdivision d'une ligne transversale, d'utiliser simultanément plusieurs lignes directes (Figure 3D) et de supprimer une ligne transversale.

En cas d'incident sur l'un des adsorbeurs, on peut isoler le couple d'adsorbeurs correspondant, comme illustré schématiquement en trait mixte sur la Figure 3 pour les adsorbeurs A₁ et A₄. L'unité peut alors continuer de fonctionner avec les quatre autres adsorbeurs, avec un cycle à un adsorbeur en production par temps de phase et un seul équilibrage. Un tel cycle de marche exceptionnelle est représenté sur la Figure 4 et comprend successivement, pour une période T', pour l'adsorbeur A₂ par exemple :
- De t = 0 à T'/4 : Phase de production.
- De T'/4 à T'1 : première dépressurisation à co-courant, par équilibrage de pressions avec un autre adsorbeur en début de repressurisation à contre-courant.
- De t'1 à T'/2 : Deuxième dépressurisation à co-courant. Le gaz issu de la sortie de l'adsorbeur est envoyé à contre-courant dans un autre adsorbeur en phase d'élution.
- De T'/2 à t'2 : Dépressurisation finale à contre-courant jusqu'à la pression basse Pm du cycle.
- De t'2 à 3T'4 : Elution à la pression basse Pm au moyen de gaz issu de la deuxième dépressurisation à co-courant d'un autre adsorbeur.
- De 3T'/4 à t'3 : Première repressurisation à contre-courant par équilibrage de pressions avec un autre adsorbeur en cours de première dépressurisation à co-courant.
- De t'3 à T' : Repressurisation finale à contre-courant au moyen de gaz de production.

La ligne directe est utilisée, dans ce cycle à quatre adsorbeurs pendant les étapes d'équilibrage de pressions.

Les vannes manuelles de coupure qui servent à réaliser un tel isolement ne sont pas représentées sur les dessins. Cependant, on comprend que, grâce à la présence des lignes directes, l'isolement de chaque couple d'adsorbeurs nécessite une vanne de moins qu'avec un schéma classique.

Les considérations ci-dessus s'appliquent de la même manière aux unités à dix adsorbeurs, et plus généralement à (4x+2) adsorbeurs. Ainsi, la Figure 6 représente une unité à dix adsorbeurs A₁ à A₁₀, qui met en oeuvre un cycle à trois équilibrages dans lequel trois adsorbeurs sont simultanément en production dans chaque temps de phase.

Le schéma de l'unité est analogue à celui de la Figure 3, avec les lignes directes L_{1,5+1} reliant les couples d'adsorbeurs A₁-A₆, A₂-A₇, A₃-A₈, A₄-A₉ et A₅-A₁₀. On retrouve les lignes transversales 1, 2 et 5, reliées comme précédemment.

La vanne Vₒ a été supprimée, et la ligne transversale 4 est subdivisée en deux demi-lignes transversales indépendantes, à savoir une demi-ligne 4P reliée à tous les adsorbeurs paire et une demi-ligne 4l reliée à tous les adsorbeurs impairs. La repressurisation finale s'effectue via une ligne transversale supplémentaire 8 piquée sur la ligne 2, munie d'une vanne de contrôle V₁ et reliée au point B, de chaque ligne directe via une vanne TOR 18, 28, 38, 48, 58 respectivement.

Le cycle représenté sur la Figure 5 diffère de celui de la Figure 2, pour l'essentiel, par les points suivants :
- L'adsorbeur reste en production pendant trois temps de phase (de t = 0 à 3T/10).
- L'adsorbeur reste en élution pendant un temps de phase supplémentaire (de 7T/10 à 4T/5), pendant lequel il reçoit à contre-courant du gaz issu d'un autre adsorbeur en cours de cinquième dépressurisation à co-courant (de T/2 à 3T/5).
- La période d'isolement de l'adsorbeur en cours de recompression est supprimée.

Dans le cas d'une telle unité à dix adsorbeurs, il y a 31 vannes de contrôle et 20 vannes TOR, contre 32 et 30 respectivement dans le schéma classique. La réduction du nombre de vannes est donc 1-(62/51) = 22 %.

Les Figures 7 et 8 illustrent l'application de l'invention à une unité à huit adsorbeurs A₁ à A₈ mettant en oeuvre un cycle à deux équilibrages dans lequel deux adsorbeurs sont en production pendant chaque temps de phase.

Le schéma de l'unité (Figure 8) est le même que celui de la Figure 3. à ceci près qu'il y a un couple d'adsorbeurs supplémentaires et que la ligne transversale 4 n'est pas subdivisée, la vanne V₀ étant supprimée. On remarque que les couples d'adsorbeurs A₁-A₅, A₂-A₆, A₃-A₇ et A₄-A₈ sont de même parité. ce qui n'est pas le cas dans les unités à six adsorbeurs (Figure 3) ou à dix adsorbeurs (Figure 7).

Une telle unité comporte 24 vannes de contrôle et 12 vannes TOR. contre 26 et 18 respectivement dans le schéma classique. Le gain en vannes est donc 1-(44/36)=22%.

Dans de telles unités à huit adsorbeurs, on peut diminuer encore le nombre de vannes de la manière indiquée en trait mixte sur la Figure 8 ; on remplace la ligne 4 par deux lignes de liaison LL1 et LL2 dont chacune, équipée d'une vanne TOR, relie les lignes directes de même parité, en se piquant aux points Bᵢ de ces lignes directes. On remplace ainsi six vannes de contrôle par deux vannes TOR.

Une telle variante s'appliquerait de la même manière à toute unité ayant 4x adsorbeurs.

Le cycle PSA correspondant, illustré sur la Figure 7, comprend successivement : une étape d'adsorption à la pression haute PM de t=0 à T/4 ; de T/4 à t₁, une première dépressurisation à co-courant par équilibrage de pressions avec un autre adsorbeur en cours de repressurisation à contre-courant ; de t₁ à t₂, un temps mort pendant lequel l'adsorbeur est isolé ; une deuxième dépressurisation à co-courant par équilibrage de pressions avec un autre adsorbeur en cours de repressurisation à contre-courant, cette étape se terminant à 3T/8 ; de 3T/8 à t₃, une troisième décompression à co-courant dans laquelle le gaz issu de la sortie de l'adsorbeur est transféré à un autre adsorbeur en cours d'élution à contre-courant ; un deuxième temps mort, qui se termine à T/2, au cours duquel l'adsorbeur est isolé ; une dépressurisation finale à contre-courant jusqu'à l'instant 5T/8 ; de 5T/8 à t₄, une étape d'élution à contre-courant à la pression basse Pm au moyen de gaz issu d'un autre adsorbeur en cours de troisième dépressurisation à co-courant; une première repressurisation à contre-courant par équilibrage de pressions avec un autre adsorbeur en cours de deuxième dépressurisation à co-courant, cette étape se terminant à 3/T4 ; de 3T/4 à t₅, une seconde repressurisation à contre-courant par équilibrage de pressions avec un autre adsorbeur en première dépressurisation à co-courant ; un troisième temps mort au cours duquel l'adsorbeur est isolé, ce temps mort se terminant à 7T/8 ; et une repressurisation finale à contre-courant au moyen de gaz de production.

On rappellera que toutes les vannes de liaison (iᵢ) dont il a été fait état précédemment sont des vannes intervenant dans le déroulement du cycle et différent de ce fait d'éventuelles vannes d'isolation, manuelles ou pneumatiques qui peuvent être prévues par ailleurs pour des opérations de maintenance. Ainsi, quoique l'invention ait été décrite en relation avec des modes de réalisation particuliers pour la séparation de mélanges gazeux particuliers, elle ne s'en trouve pas limitée mais est susceptible d'adaptations et de variantes qui apparaîtront à l'homme de métier dans le cadre des revendications ci-après.

## Revendications

1. Unité d'adsorption à modulation de pression (Pressure Swing Adsorption ou PSA), du type comprenant 2N adsorbeurs (N ≥ 2) ayant chacun une sortie de production, **caractérisée en ce que** :
- les adsorbeurs (A₁,....) sont couplés sous la forme de paires d'adsorbeurs (Aᵢ, A_{N+i});
- les sorties des adsorbeurs de chaque paire (Aᵢ, A_{N+i}) sont reliées par une ligne directe (L_{i,N+i}) munie de deux premières vannes (i3, (N+i)3) ; et
- un point intermédiaire (Bᵢ) de la ligne directe situé entre les deux premières vannes est relié à une ligne transversale (2) commune à toutes les paires, **caractérisée en ce que** la liaison entre le point intermédiaire (Bᵢ) de la ligne directe et la ligne transversale (2) se fait par l'intermédiaire d'une vanne de liaison (i2).

2. Unité d'adsorption suivant la revendication 1, **caractérisée en ce que**, les adsorbeurs étant numérotés dans leur ordre de passage en phase de production au cours de chaque cycle, les couples d'adsorbeurs sont A₁-A_{N+1}, A₂-A_{N+2},..., Aᵢ-A_{N+i},..., A_{N}-A_{2N}.

3. Unité d'adsorption suivant la revendication 1 ou 2, **caractérisée en ce qu'**au moins deux desdits points intermédiaires (Bᵢ) sont reliés par une ligne de liaison (7) munie d'une deuxième vanne de liaison (i7).

4. Unité d'adsorption suivant l'une quelconque des revendications 1 à 3, **caractérisée en ce que** les deux premières vannes (i3, (N+i)3) sont des vannes de contrôle tandis que les vannes de liaison (i2, i7) sont des vannes tout ou rien.

5. Unité d'adsorption suivant la revendication 4, **caractérisée en ce que** ledit point intermédiaire (Bᵢ) est en outre relié à la ligne transversale commune (2) par une ligne de liaison supplémentaire munie d'une vanne de liaison supplémentaire (i2') qui est une vanne de contrôle.

6. Unité d'adsorption suivant l'une quelconque des revendications 1 à 5, **caractérisée en ce qu'**elle comprend en outre au moins une ligne transversale additionnelle (4, 6) reliée individuellement à la sortie de chaque adsorbeur (Aᵢ) à travers une vanne de contrôle (i4, (N+i)4, i6, (N+i)6).

7. Unité d'adsorption suivant la revendication 6, **caractérisée en ce qu'**au moins une ligne transversale additionnelle (4) peut être subdivisée, par manoeuvre d'une vanne additionnelle (V₀), en deux demi-lignes transversales reliées chacune à N adsorbeurs.

8. Unité d'adsorption suivant la revendication 6, **caractérisée en ce qu'**au moins une ligne transversale additionnelle (4) est subdivisée en deux demi-lignes transversales (4A, 4B), dont chacune est reliée à N adsorbeurs.

9. Unité d'adsorption selon l'une des revendications 1 à 8, **caractérisée en ce qu'**elle comporte une seule ligne directe (L_{i,N+i}) pour chaque paire d'adsorbeurs.

10. Unité d'adsorption selon l'une des revendications 1 à 9, **caractérisée en ce que** N ≥ 3.

11. Unité d'adsorption suivant l'une des revendications 1 à 10, **caractérisée en ce que** les adsorbeurs contiennent au moins un adsorbant adapté à la production d'hydrogène, de méthane ou de CO.

## Claims

1. Pressure swing adsorption (PSA) unit of the type comprising 2N adsorbers (N ≥ 2) each having a production outlet, **characterized in that**:
- the adsorbers (A₁,....) are coupled in the form of adsorber pairs (Aᵢ,A_{N+i}) ;
- the outlets of the adsorbers of each pair (Aᵢ, A_{N+i}) are connected by a direct line (L_{i,N+i}) equipped with two first valves (i3,(N+i)3); and
- an intermediate point (Bᵢ) of the direct line located between the two first valves is connected to a transverse line (2) common to all the pairs, **characterized in that** the connection between the intermediate point (Bᵢ) of the direct line and the transverse line (2) is provided by a connecting valve (i2).

2. Adsorption unit according to Claim 1, **characterized in that**, when the adsorbers are numbered in their order of passage into the production phase during each cycle, the adsorber pairs are A₁-A_{N+1}, A₂-A_{N+2}, ... , Aᵢ-A_{N+i}, ..., A_{N}-A_{2N}).

3. Adsorption unit according to either of Claims 1 and 2, **characterized in that** at least two of the said intermediate points (Bᵢ) are connected by a connecting line (7) equipped with a second connecting valve (i7).

4. Adsorption unit according to any one of Claims 1 to 3, **characterized in that** the two first valves (i3, (N+i)3) are control valves, while the connecting valves (i2, i7) are on/off valves.

5. Adsorption unit according to Claim 4, **characterized in that** the said intermediate point (Bᵢ) is further connected to the common transverse line (2) by an additional connecting line equipped with an additional connecting valve (i2') which is a control valve.

6. Adsorption unit according to any one of Claims 1 to 5, **characterized in that** it further comprises at least one additional transverse line (4, 6) connected individually to the outlet of each adsorber (Aᵢ) via a control valve (i4, (N+i)4, i6, (N+i)6).

7. Adsorption unit according to Claim 6, **characterized in that** at least one additional transverse line (4) may be subdivided, by operating an additional valve (V₀), into two transverse half-lines each connected to N adsorbers.

8. Adsorption unit according to Claim 6, **characterized in that** at least one additional transverse line (4) is subdivided into two transverse half-lines (4A, 4B), each of which is connected to N adsorbers.

9. Adsorption unit according to one of Claims 1 to 8, **characterized in that** it comprises a single direct line (Li,_{N+i}) for each pair of adsorbers.

10. Adsorption unit according to one of Claims 1 to 9, **characterized in that** N ≥ 3.

11. Adsorption unit according to one of Claims 1 to 10, **characterized in that** the adsorbers contain at least one adsorbent suitable for the production of hydrogen, methane or CO.

## Patentansprüche

1. Druckwechseladsorptionseinheit (Pressure Swing Adsorption oder PSA) des Typs mit 2N Adsorbern (N ≥ 2), die jeweils einen Produktionsausgang haben, **dadurch gekennzeichnet, dass**:
- die Adsorber (A₁, ...) in Adsorberpaaren (Aᵢ, A_{N+1}) gekoppelt sind;
- die Ausgänge der Adsorber jedes Paars (Aᵢ, A_{N+i}) durch eine direkte Leitung (Lᵢ, _{N+i}), die mit zwei ersten Schiebern (i3, (N+i)3) versehen ist, verbunden sind; und
- ein Zwischenpunkt (Bᵢ) der direkten Leitung, der sich zwischen den zwei ersten Schiebern befindet, mit einer Querleitung (2) verbunden ist, die allen Paaren gemeinsam ist, **dadurch gekennzeichnet, dass** die Verbindung zwischen dem Zwischenpunkt (Bᵢ) der direkten Leitung und der Querleitung (2) über einen Verbindungsschieber (i2) erfolgt.

2. Adsorptionseinheit nach Anspruch 1, **dadurch gekennzeichnet, dass**, da die Adsorber in der Reihenfolge ihres Übergangs auf Produktionsphase im Laufe jedes Zyklus nummeriert sind, die Adsorberpaare A₁-A_{N+1}, A₂-A_{N+2}, ... Aᵢ-A_{N+i}, ..., A_{N}-A_{2N} sind.

3. Adsorptionseinheit nach Anspruch 1 oder 2, **dadurch gekennzeichnet, dass** mindestens zwei der Zwischenpunkte (Bᵢ) durch eine Verbindungsleitung (7) verbunden sind, die mit einem zweiten Verbindungsschieber (i7) versehen ist.

4. Adsorptionseinheit nach einem der Ansprüche 1 bis 3, **dadurch gekennzeichnet, dass** die zwei ersten Schieber (i3, (N+i)3) Steuerschieber sind, während die Verbindungsschieber (i2, i7) Alles-oder-Nichts-Schieber sind.

5. Adsorptionseinheit nach Anspruch 4, **dadurch gekennzeichnet, dass** der Zwischenpunkt (Bᵢ) ferner mit der gemeinsamen Querleitung (2) durch eine zusätzliche Verbindungsleitung verbunden ist, die mit einem zusätzlichen Verbindungsschieber (i2'), der ein Steuerschieber ist, versehen ist.

6. Adsorptionseinheit nach einem der Ansprüche 1 bis 5, **dadurch gekennzeichnet, dass** sie ferner mindestens eine zusätzliche Querleitung (4, 6) aufweist, die einzeln mit dem Ausgang jedes Adsorbers (Aᵢ) über einen Steuerschieber (i4, (N+i)4, i6, (N+i)6) verbunden ist.

7. Adsorptionseinheit nach Anspruch 6, **dadurch gekennzeichnet, dass** mindestens eine zusätzliche Querleitung (4) durch Betätigen eines zusätzlichen Schiebers (V₀) in zwei Halbquerleitungen, die jeweils mit N Adsorbern verbunden sind, unterteilt werden kann.

8. Adsorptionseinheit nach Anspruch 6, **dadurch gekennzeichnet, dass** mindestens eine zusätzliche Querleitung (4) in zwei Halbquerleitungen (4A, 4B), die jeweils mit N Adsorbern verbunden sind, unterteilt ist.

9. Adsorptionseinheit nach einem der Ansprüche 1 bis 8, **dadurch gekennzeichnet, dass** sie eine einzige direkte Leitung (L_{i,N+i}) für jedes Adsorberpaar aufweist.

10. Adsorptionseinheit nach einem der Ansprüche 1 bis 9, **dadurch gekennzeichnet, dass** N ≥ 3 ist.

11. Adsorptionseinheit nach einem der Ansprüche 1 bis 10, **dadurch gekennzeichnet, dass** die Adsorber mindestens ein Adsorptionsmittel enthalten, das zur Wasserstoff-, Methan- oder CO-Produktion geeignet ist.
